# FASCICULE DE BREVET EUROPEEN

(11) **EP 0 643 642 B1**
(45) Date de publication et mention de la délivrance du brevet: **04.12.1996**
(21) Numéro de dépôt: 93913078.7
(22) Date de dépôt: 28.05.1993
(51) Int. Cl.: B29C 65/20, G05B 19/12

(54) **PROCEDE POUR SOUDER BOUT A BOUT DEUX PIECES PLASTIQUES A CODE D'IDENTIFICATION, AU MOYEN D'UNE MACHINE D'ELECTROSOUDAGE A COMMANDE AUTOMATIQUE**
VERFAHREN ZUM STUMPFSCHWEISSEN VON ZWEI MIT IDENTIFIKATIONSKODEN VERSEHENEN GEGENSTÄNDEN DURCH EIN AUTOMATISCHES ELEKTROSCHWEISSGERÄT
METHOD FOR BUTT-WELDING TWO PLASTIC PARTS WITH IDENTIFICATION CODE, BY MEANS OF AN AUTOMATICALLY CONTROLLED ELECTRO-WELDING MACHINE

(30) Priorité: 01.06.1992 FR 9206616
(43) Date de publication de la demande: 22.03.1995
(73) Titulaire: GAZ DE FRANCE, 75017 Paris (FR); SOCIETE JOSEPH SAURON MATERIEL INDUSTRIEL, 91070 Bondoufle (FR)
(72) Inventeur: SAURON, Jean, F-91210 Draveil (FR); HUGUENY, J. C., F-94490 Ormesson (FR)
(74) Mandataire: Lerner, François
(86) Numéro de dépôt international: FR9300518
(87) Numéro de publication internationale: WO9324301

(56) Documents cités:
- EP-A- 0 196 795
- EP-A- 0 272 978
- EP-A- 0 335 010
- DE-U- 9 114 932
- FR-A- 2 572 326
- GB-A- 2 049 994
- GB-A- 2 208 310
- US-A- 4 837 424
- US-A- 5 013 376
- KUNSTSTOF EN RUBBER vol. 43, no. 10 , Octobre 1990 , ROTTERDAM NL pages 59 - 61 XP000175811 J.D.C. MEIJERINK 'Het stuiklassen van buizen en fittingen' cité dans la demande voir page 60, colonne de droite - page 61, colonne de gauche voir page 61, colonne de droite, alinéa 2
- PLASTVERARBEITER vol. 36, no. 10 , Octobre 1985 , SPEYER/RHEIN DE pages 86 - 94 H. POTENTE , J. KREITER 'Rechnersteuerung beim Heizelementstumpfschweissen'

## Description

L'invention se rapporte au domaine de la liaison bout à bout par soudage de pièces en matière plastique, et notamment de pièces en polyéthylène.

Le soudage bout à bout est une technique connue qui s'effectue en venant mettre en contact deux extrémités en regard des deux pièces à réunir, les extrémités d'aboutement en question des pièces ayant été chauffées jusqu'à leur température de ramollissement ou fusion, de manière que leur contact sous pression assure, après refroidissement, une bonne soudure.

S'il existe aujourd'hui des machines permettant d'effectuer notamment le chauffage des extrémités d'aboutement des pièces, il est par contre actuellement laissé à la discrétion et à la compétence des opérateurs d'établir en particulier les compatibilités dimensionnelles et qualitatives des pièces à assembler et d'adapter les critères de soudage à respecter. Le document FR-A-2 572 326 montre un procédé de soudage de tubes de l'art antérieur.

Il en résulte dans la pratique un certain nombre d'erreurs préjudiciables à la fiabilité des réseaux et des conduites, la qualité des soudures dépendant de la compétence des opérateurs et des conditions d'intervention.

Or, il s'avère que pour des emplois en nombre toujours croissant et en particulier pour l'établissement de réseaux de distribution de fluide (gaz, air et autres liquides industriels), on utilise de plus en plus fréquemment des tubes en matière plastique qui, dans un certain nombre de cas, doivent être thermosoudés bout à bout de la manière brièvement indiquée ci-dessus.

Il existe de surcroît différentes normes ou différents critères de soudage et les fabricants ou utilisateurs de pièces doivent s'y conformer, ce qui multiplie encore les risques d'erreurs d'interprétation.

L'invention a pour objet d'apporter une solution permettant de réduire nettement ces risques, en assurant une sécurité de procédure et une fiabilité des soudures, quelles que soient pratiquement les conditions d'intervention.

A cet effet, l'invention propose un procédé pour autoriser de manière sélective le soudage bout à bout de deux pièces tubulaires en matière plastique au moyen d'une machine à commande automatique, dans lequel procédé :
- a) on associe à chacune des pièces un code d'identification propre à être lu par des moyens de lecture de la machine,
- b) on entre dans un ordre et en des emplacements déterminés de chaque code, des données au moins relatives à certaines des caractéristiques suivantes :
   b₁) épaisseur et/ou diamètre extérieur de la pièce concernée, à son extrémité où elle doit être soudée sensiblement coaxialement avec l'autre pièce,
   b₂) température, ou plage de température, correspondant à celle à laquelle un élément de chauffage électrique doit être porté pour que ladite pièce atteigne à son extrémité d'aboutement la température de ramolissement convenant à son soudage,
   b₃) intervalle de temps pendant lequel ladite pièce doit être placée au contact de l'élément chauffant,
   b₄) intervalle de temps pendant lequel ladite pièce doit subir une pression contre l'autre pièce,
   b₅) pression, ou plage de pression, correspondant à celle que doit subir cette pièce pendant ledit intervalle de temps suivant b₄,
   b₆) type de matière plastique constituant la pièce, et
   b₇) indice, ou plage d'indice, de fluidité de cette matière,
- c) on conduit, par lesdits moyens de lecture, une acquisition des données desdits codes,
- d) on fait effectuer par la machine une comparaison entre les codes, donnée par donnée,
- e) si, respectivement, les données acquises relatives auxdites caractéristiques b₁) à b₇) des deux codes concordent deux à deux, au moins pour certaine, une compatibilité entre codes est reconnue et on détermine une série de valeurs communes aux deux pièces, relativement respectivement au moins :
   à la température T de chauffage à laquelle doit être porté l'élément chauffant pour que les pièces atteignent à leur extrémité d'aboutement la température de ramolissement convenant à leur soudage,
   au temps t₁ pendant lequel lesdites pièces sont à placer au contact de cet élément chauffant,
   à la pression P à exercer sur l'une au moins desdites pièces pour les presser l'une contre l'autre, et
   au temps t₂ pendant lequel cette pression de contact entre les pièces doit être maintenue,
- f) et on fournit cette série de valeurs au programme de soudage associé à la machine pour autoriser la soudure des pièces en fonction au moins desdites valeurs déterminées selon e).

De cette manière, les pièces pourront être jointes quasiment sans risque d'erreur quant à leur compatibilité et aux paramètres essentiels de soudage à respecter.

En pratique, les "concordances" auxquelles il est fait référence suivant l'étape e) pourront être strictes (identité entre des valeurs correspondant aux caractéristiques concernées de chaque code) ou "relatives" (compatibilité reconnue dès lors que les valeurs en cause se correspondent, dans certaines gammes de tolérances prédéterminées, ou si les plages de valeurs attribuées se chevauchent).

Dans l'hypothèse où une telle compatibilité "relative" sera reconnue, alors la série de valeurs précitées (T, P, t₁, t₂) nécessaires pour déterminer les conditions de soudage, pourra en particulier être obtenue automatiquement en machine, par l'intermédiaire d'une unité de calcul intégrée fournissant une valeur moyenne pour chaque paramètre T, P, t₁, t₂, à partir des valeurs tolérancées ou plages de valeurs concordantes lues sur les codes.

Dans le cadre des opérations de soudage prises dans leur ensemble, domaine auquel se rapporte également l'invention, on notera par ailleurs que, selon une autre caractéristique, plutôt que d'entrer "en clair" dans chaque code des valeurs (ou plages de valeurs) des paramètres b₁)à b₅) concernées (par exemple 210-230 pour la plage de température de chauffage en °c autorisée, suivant b₂, ou encore 070-120 pour l'intervalle de temps en seconde suivant b₃, ...etc), on pourra regrouper dans chaque code certaines au moins de ces données b₁) à b₅), sous une référence de norme de soudage déterminée (exemple code 1 pour la norme française, code 2 pour la norme US,...). Parallèlement, on associera alors à la machine une unité mémoire spécifique dans laquelle seront stockées des échelles de valeurs relatives à ces données regroupées. Et, à partir de ces échelles de valeurs, on attribuera pour chaque code les valeurs correspondant à chacune desdites données regroupées sous laréférence de norme ; puis, lors de l'étape e), on comparera code à code les valeurs attribuées, et, si ces valeurs concordent, on déterminera lesdites valeurs de température, pression et temps (t₁, t₂, T, P) communes aux deux pièces, de préférence par calcul de valeurs moyennes, ou en appliquant un coefficient rectificateur, en fonction des références de norme, propres aux codes.

Un tel "regroupement" codé devrait être intéressant surtout si l'on doit travailler avec plusieurs normes de soudage (norme DVS, norme américaine...).

En pratique, il pourra alors être très avantageux de n'avoir pas à entrer dans la mémoire de la machine toutes ces normes avec leurs paramètres associés, évitant ainsi un système informatique trop lourd et difficile à gérer dans le temps.

Quoi qu'il en soit, on aura compris qu'en fonction de l'évolution des normes imposées de par le monde, l'invention permet en particulier de travailler soit à partir d'une norme "générale" si elle existe (norme européenne par exemple si le soudage doit s'effectuer en Europe avec des pièces fabriquées en Europe, voire norme "mondiale" ISO), soit à partir de deux normes référencées chacune dans le code de l'une des deux pièces à souder, les tableaux de compatibilité et de valeurs propres à ces codes entrées en mémoire machine permettant alors d'autoriser ou non le soudage, et de le mener à bien, si la compatibilité des pièces est reconnue par la machine.

D'autres caractéristiques et avantages de l'invention apparaitront encore de la description plus détaillée qui va suivre faite en référence aux dessins annexés donnés uniquement à titre d'exemple de réalisation non limitatif et dans lesquels :
- la figure 1 est une vue générale d'ensemble d'un dispositif de soudage bout à bout,
- la figure 2 est le schéma synoptique d'ensemble des moyens d'automatisation de ce soudage selon l'invention,
- les figures 3, 4, 5, 6 et 7 illustrent schématiquement les principales étapes devant conduire à une soudure aboutée de deux tubes.
- et la figure 8 montre un exemple de courbe température/épaisseur pouvant être entrée en mémoire de la machine.

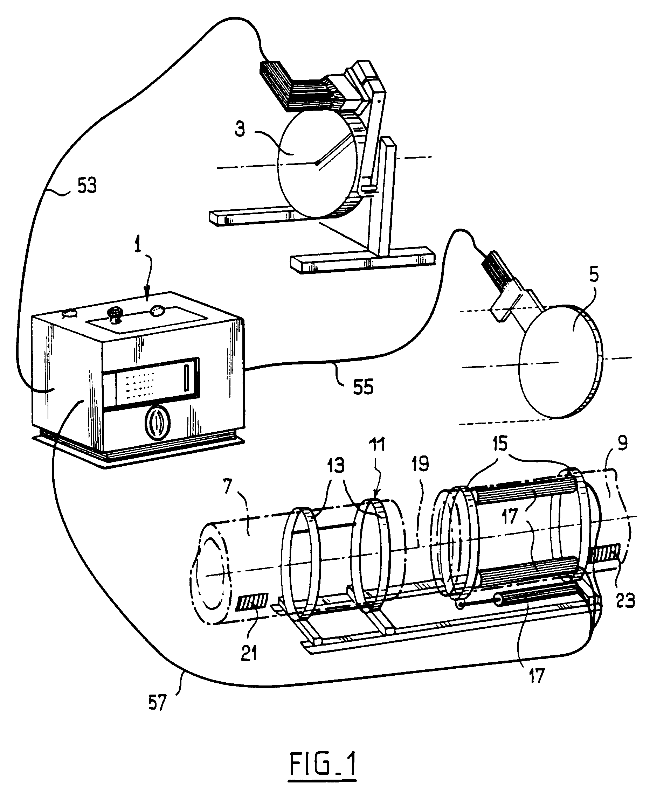

Sur la figure 1 tout d'abord, on voit donc illustrée une machine de soudage comprenant un boîtier de contrôle 1 comprenant au moins trois sorties électriques pour sa liaison par des câbles appropriés, d'une part à un dispositif 3 permettant de dresser les extrémités des pièces, d'autre part à un moyen de chauffage 5 de ces extrémités dressées, ce moyen de chauffage étant souvent appelé "miroir chauffant", et enfin à une unité 17 de vérins du bâti sur lequel les tubes ont été coaxialement installés.

Pour maintenir en position les pièces, telles qu'en l'espèce les deux tubes 7 et 9, la machine comprend donc un bâti 11 comportant deux groupes de cerclage 13, 15 équipés de moyens de serrage formant mors de maintien des tubes (non représentés), les cerclages associés à l'unité de vérins 17 permettant de déplacer en translation les deux tubes, dans l'axe 19 le long duquel ils ont été placés.

A l'exception d'une partie de la structure interne du boîtier 1 relative à l'automatisation du soudage que l'on va présenter ci-après, la machine de contrôle brièvement présentée ci-dessus est en soi connue.

Des machines de ce type sont notamment fabriquées et distribuées par la Société "WIDOS" (SCHILLER STRAßE 48, A-2 351 Wr. NEUDORF, notamment sous la référence 4400 CNC Unit) ou encore "FUSION GROUP" (UK - Chesterfield Trading Estate - Sheepbridge - CHESTERFIELD, référence S419 pz).

On notera simplement qu'une telle machine permet, outre de dresser les faces des extrémités des pièces perpendiculairement à leur axe, d'aligner ces extrémités et d'écarter ou de rapprocher lesdites pièces, tout en autorisant la mise en place ou le retrait du dispositif de dressage et du miroir chauffant (voir également brevet EP 196 795 ou publication "KUNSTOF EN RUBBER" vol. 43, n° 10, octobre 1990 - ROTTERDAM ; pages 59-61 ; JC. MEIJERINK).

Conformément à l'invention, chacun des deux tubes 7, 9 de la figure 1 a été équipé d'un code d'identification 21, 23 qui peut se présenter sous la forme d'un badge ou d'un label fixé ou associé aux tubes, et du type code à barres, voire piste magnétique ou puce électronique notamment, ou de tout autre système lié au développement de la technique du codage.

Dans ces codes d'identification ont été entrées, par exemple à l'issue de leur fabrication, toutes les informations qui vont être utiles au soudage.

En l'espèce chaque code 21 ou 23 comprend une succession de zones distinctes lisibles par un moyen de lecture approprié. Ces zones contiennent des données (valeurs de paramètres ou référence) en fonction desquelles va être mis en oeuvre, en machine, un programme informatique de soudage.

En particulier, si le soudage peut être mené à partir d'une norme commune, chaque code d'identification renfermera de préférence des informations codées relatives au moins à l'épaisseur et au diamètre (ou section) de la pièce considérée à son extrémité d'aboutement ; à la température ou plage de températures correspondant à celle à laquelle l'élément 5 doit être porté pour assurer un ramolissement local convenable de ladite pièce ; à l'intervalle de temps pendant lequel cette pièce devra être placée au contact de l'une des deux surfaces chauffantes de l'élément 5 ; à l'intervalle de temps pendant lequel cette même pièce devra subir une pression à son extrémité d'aboutement, au contact de l'autre pièce ; à la pression, ou plage de pression, correspondant à celle que va devoir subir la pièce pendant l'intervalle de temps précédent ; mais également avantageusement au type de matière (polyéthylène basse densité : PEBD ; PEHD ; PEMD ; PMMA,...) constituant la pièce, et à l'indice ou plage d'indices de fluidité de cette matière, définissant donc sa viscosité dynamique, d'autant qu'à la place de tubes, on pourrait tout à fait avoir à souder bout à bout un tube et une pièce de raccordement (telle qu'un té, un vé ou un coude...) voire deux pièces de raccordement, telles qu'un té suivi d'un coude. Il pourra importer en conséquence de pouvoir les reconnaître, notamment pour en interdire le soudage si elles ne sont pas compatibles, par exemple en termes de diamètre ou de matière.

En complément, les codes pourront incorporer, de préférence dans une autre zone, des données relatives au métrage des pièces (s'il s'agit de tubes) et/ou à leur diamètre interne. La date de fabrication des pièces (ou une date de péremption de soudage) ainsi que l'identité du manufacturier pourra également s'avérer utile.

A titre d'exemple, les données contenues dans les codes pourraient d'ailleurs être réparties comme suit :
Sept zones pourraient être réservées sur un code à barres, avec 6 zones successives de définition et une septième zone de contrôle.

La première zone peut comprendre trois caractères, par exemple réservés à l'identité du manufacturier. Le premier chiffre pourrait servir à identifier le pays (1 à 9), les deuxième et troisième chiffres identifiant un numéro d'ordre de fabrication.

Dans la deuxième zone, comprenant deux caractères, le premier caractère pourrait être réservé à l'identification du matériau (1 pour polyéthylène haute densité, deux pour polypropylène... ainsi de suite jusqu'à neuf), le deuxième caractère permettant d'inscrire un paramètre important tel que l'indice de fluidité (on réservera bien entendu plus d'un caractère si l'on doit entrer une plage d'indices de fluidité. Quatre caractères pourront être nécessaires).

La troisième zone pourrait être réservée à l'indication de l'épaisseur, des diamètres extérieur et intérieur de la pièce concernée, ceci par exemple sur sept caractères, en différenciant les dimensions en millimètre (système international) et en pouce (ou "inches") (système CTS ou IPS).

En zone 4, avec cinq caractères, pourront être indiquées la date de fabrication de la pièce concernée (5 caractères) ainsi que sa date de péremption (deux caractères).

La zone 5 de quatre caractères pourra comporter le métrage du tube si celui-ci est exprimé. S'il s'agit d'une pièce de raccordement (vé, té...), la mention pourra être : 0000.

La zone 6, de par exemple vingt six caractères, pourra notamment indiquer successivement :
a) - la température ou plage de températures correspondant à celle à laquelle l'élément chauffant 5 doit être porté pour que la pièce correspondante atteigne à son extrémité d'aboutement la température de ramolissement convenant à son soudage. Sept caractères pourront être réservés à cet effet. Ainsi, la valeur codée 220-240 pourra par exemple être entrée dans cette première partie de la zone 6 si la plage de température allant de 220 à 240 °C est retenue,
b) - l'intervalle de temps, pendant lequel la pièce en question devra être placée au contact de l'élément chauffant 5. Sept caractères pourront également être réservés. Par exemple, si l'intervalle de temps en question doit être limité entre 50 et 80 secondes, les données codées suivantes seront inscrites dans le code : 050-080. Il pourra également être entrée la donnée 0000045 si le temps maximum autorisé est de 45 secondes ;
c) - l'intervalle de temps pendant lequel la pièce en question va devoir subir ensuite une pression contre l'autre pièce. A nouveau, sept caractères pourront être réservés pour entrer la durée correspondante, laquelle dans les exemples connus s'échelonnent habituellement entre environ 4 à 5 minutes et plus de 30 minutes pour les pièces les plus épaisses.
d) - La pression ou plage de pression, correspond à celle que devra subir la pièce pendant l'intervalle de temps précédent. Cette pression pourra par exemple être indiquée en centième N/mn². Cinq caractères pourront être utilisés. On pourra ainsi entrer 12-17 pour indiquer que la plage de pression autorisée est comprise entre 0,12 et 0,17 N/mn² ; ou encore 00014 si l'on souhaite une valeur de pression stricte de 0,14 N/mn².

Des caractères supplémentaires pourront en outre être réservés si l'on veut accorder certaines tolérances et que le nombre de caractères déjà disponibles n'est pas suffisant.

A ces 47 caractères actifs sera enfin associé, en zone 7, un dernier caractère "pair" de contrôle de la bonne acquisition des précédents, deux caractères de "départ" et de "fin" encadrant le tout pour autoriser une lecture bi-directionnelle.

Eventuellement, une zone complémentaire pourra également être prévue. Dans celle-ci, qui pourrait comprendre 8 caractères, seraient alors inscrits les codes correspondant aux températures, temps et pression(s) à respecter, "court-circuitant" alors les informations de la zone 6 plaçant la machine en mode "manuel", l'opérateur définissant alors lui-même les valeurs desdits paramètres de soudage à appliquer.

Pour tout complément concernant des exemples d'agencement notamment de codes à barres, on pourra se reporter aux brevets EP-A-0 272 978 ou US-A-4 837 424 dont le contenu est incorporé à la présente description par référence.

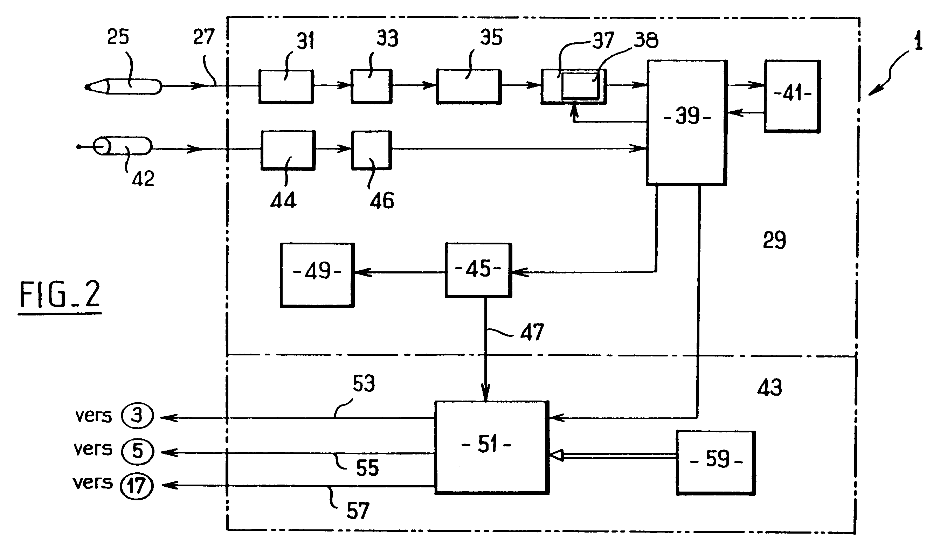

Sur la figure 2, on a représenté en 25 le moyen de lecture utilisable pour lire les codes 21, 23. Dans le cas d'un code à barres, il s'agira d'un crayon optique ou à lecture laser. Dans le cas d'un code magnétique, on pourrait utiliser une tête magnétique.

Le crayon 25 est relié par son câble de connexion 27 à l'étage analogique/logique 29 du boîtier 1 qui va permettre d'introduire en machine les données opératoires lues successivement sur chaque code des pièces.

A l'intérieur de l'étage analogique/logique 29, les signaux fournis par le moyen de lecture 25, vont rencontrer successivement un amplificateur 31, un circuit de mise en forme du signal amplifié 33, un circuit de décodage 35, un circuit de vérification/lecture 37 intégrant une unité de comparaison 38, et un circuit de traitement des données 39 piloté par une unité de calcul à microprocesseur intégré et associé à une unité mémoire 41.

Dans l'unité de comparaison 38, vont être comparées les données acquises relatives aux caractéristiques lues tout particulièrement dans les zones 2, 3 et 6.

Si les données inscrites dans les codes pour chacun de ces critères concordent d'un code à l'autre, c'est-à-dire si les données se correspondent strictement ou si les plages accordées se chevauchent, il est de préférence prévu que dans ces deux cas une compatibilité entre code sera reconnue.

Bien entendu, au cours du traitement des informations, le circuit 39 à qui est associée une unité mémoire 41, sera sollicité.

Une fois la compatibilité reconnue, un signal logique sera de toute façon transmis ve's l'unité de calcul du circuit 39, pour alors déterminer les valeurs des paramètres essentiels suivants qui seront alors bien entendu communs aux deux pièces à souder.

En pratique, ces paramètres sont au moins :
- la température T de chauffage à laquelle doit être porté l'élément chauffant 5 pour que les pièces 7, 9 atteignent à leur extrémité d'aboutement la température de ramollissement (ou de fusion) correspondant à leur soudage,
- au temps t₁ pendant lequel ces pièces sont à placer au contact de l'élément 5,
- à la pression P à exercer sur l'une au moins de ces pièces pour les mettre au contact l'une de l'autre, et
- au temps t₂ pendant lequel cette pression de contact P entre les pièces 7, 9 va devoir être maintenue.

Ce calcul de paramètres pourra notamment être réalisé par calcul de valeurs moyennes pour chaque paramètre, à partir des valeurs ou plages de valeurs de chevauchement correspondant, dans les codes, aux caractéristiques concernées de pression, température et temps.

Pour la température T de chauffage par exemple, si le code de la première pièce comprend dans les sept premiers caractères de sa zone 6, la donnée 200-230 et que le second code comprend dans la même partie de zone les données 190-220, alors l'unité de calcul 39 pourra par exemple, à partir de la plage de chevauchement correspondante (200-220), calculer la valeur moyenne qui doit être attribuée à cette température T de chauffage, à savoir 210°C.

Il pourra être bien entendu procédé de la même manière pour déterminer notamment les paramètres t₁, t₂ et P.

Bien que la compatibilité puisse être reconnue par la machine sur tous les paramètres précités, il peut malgré tout s'avérer que l'unité de comparaison 38 détecte des différences entre les données codées correspondant par exemple au type de matière plastique constituant les pièces et/ou aux indices ou plages d'indices de fluidité.

Pour éviter que la machine interdise alors systématiquement le soudage, il a été envisagé dans l'invention d'entrer dans une partie de l'unité mémoire 41 au moins deux tableaux de compatibilité relatifs respectivement aux différents types de matière et indices (ou plages d'indice) de fluidité connus.

Ainsi, lorsque l'unité de comparaison 38 sera activée, elle pourra obtenir de cette partie de la mémoire 41 les données de compatibilité introduites dans ces tableaux et, suivant ces critères prédéterminés, reconnaître malgré tout certaines compatibilités entre les pièces.

Eventuellement, d'autres tableaux complémentaires de valeurs pourraient également être rentrés dans d'autres parties de l'unité mémoire 41 pour corriger les valeurs communes T, P, t₁ et t₂ précitées pour tenir compte des variations de types de matière ou d'indices de fluidité détectées entre les codes.

Quoi qu'il en soit, dès lors que les caractéristiques de température (T), pression(s)(P...) et temps (t₁, t₂,...) auront été déterminées, après lecture des codes, le programme informatique préétabli de la machine adressera vers l'étage de puissance 43, les signaux de commandes adaptés pour délivrer les tensions et/ou intensités appropriées à ces paramètres.

Dans l'éventualité où l'unité de comparaison 37-38 aura malgré tout détectée une incompatibilité entre certaines parties des deux codes lus par le lecteur 25, il a en outre été prévu qu'un circuit de contrôle 45 associé à l'unité 39 commande, via la ligne 47, l'arrêt du cycle de soudage avec parallèlement affichage d'une information d'erreur ou d'arrêt sur une unité de visualisation 49.

Une fois la compatibilité des codes vérifiée par l'unité 37, et les données de commande en terme d'intensité(s) et/ou de tension(s) et de durée(s) fournie par l'unité 39, l'unité de commande de puissance 51 de l'étage 43 va donc fournir la puissance requise pendant le temps déterminé, ceci vers l'un des trois câbles 53, 55, 57 reliés respectivement à l'unité de dressage 3, au miroir chauffant 5 et à l'unité de vérins 17, cette énergie électrique pouvant être fournie par une source 59 extérieure, telle par exemple que celle du réseau électrique général ou par un générateur de chantier (courant continu a priori).

Sur la figure 2, on remarquera encore qu'on a adjoint à la machine un capteur de température 42 prévu pour relever la température des pièces en début d'intervention et permettre de corriger les données du programme de soudure en cas d'écart important de température avec une température ambiante de travail prédéterminée. Pour cela, la sonde 42 est reliée, via l'amplificateur 44 et l'unité de mesure 46, à l'unité de traitement précitée 39.

Plutôt, comme cela a été décrit ci-avant, que d'entrer en zone 6, les valeurs numériques des paramètres tests de la compatibilité (pression, temps, température...), il est à noter qu'il a également été prévu dans l'invention que toutes ces informations soient "regroupées" dans chaque code sous une donnée unique correspondant à une référence de norme de soudage, ceci pouvant être très utile en particulier dans le cas où la pièce 7 dont le code a été établi pour quelle soit soudée suivant une norme (I) serait à souder suivant une norme (II), avec la pièce 9.

En d'autres termes, et en particulier s'il peut exister des problèmes de divergence de normes, il est prévu dans l'invention de réduire, pour chaque code, la zone 6 par exemple à deux caractères, indiquant alors uniquement la référence de normalisation suivant laquelle le soudage devrait être conduit.

Dans ce cas, avec une zone 6 ainsi réduite, ce sera dans l'unité mémoire interne 41 que devront alors être entrées les échelles de valeurs relatives aux paramètres de soudage (temps, température(s), pression (s)). Et c'est là que le programme informatique préétabli ira "puiser", en fonction des données codées fournies par le lecteur 25, pour adresser vers l'étage de puissance 43, les signaux de commande adaptés pour délivrer les tensions et/ou intensités appropriées vers l'unité de vérins 17.

Pour toute information concernant par exemple la norme applicable en France pour le thermosoudage bout à bout de deux pièces en polyéthylène, on pourra se reporter à la publication de la norme "polyéthylène" par "l'Institut de Soudure", document édité et publié par "les publications de soudure autogène" (fascicule de documentation D.V.S. 2207 ayant pour titre "soudage de pièces thermoplastiques en polyéthylène" pages 1 à 14 - Mai 1984). Son contenu est inclus à la présente description par référence.

Si l'on veut toutefois éviter d'avoir à entrer alors en mémoire des tableaux entiers de valeurs à attribuer aux paramètres retenus, une solution proposée est de constituer ces informations comme des valeurs moyennes de paramètres de plusieurs normes existantes, pour réaliser ainsi une loi moyenne de soudage.

Une autre solution serait de définir et d'entrer en mémoire un coefficient ou un tableau de coefficient correcteur(s) fonction des normes codées, permettant de rendre compatibles plusieurs normes.

En référence maintenant à l'ensemble des figures 1 à 7, on va présenter un exemple d'application pour le soudage bout à bout des deux tubes 7 et 9 de la figure 1 correctement placés en alignement entre les mors du bâti 11.

Les deux pièces ainsi en position, on viendra tout d'abord, via le lecteur 25, lire successivement, chacun des deux codes 21, 23 des pièces de manière que l'unité 39 acquiert leurs données.

Si l'on appose que l'on se trouve dans la seconde hypothèse prise en compte dans l'invention, à savoir une zone 6 réduite renfermant une référence de norme, le lecteur 25 va alors fournir à la machine, pour chaque code et donc pour chaque tube, la référence en question, ainsi que, dans l'exemple retenu, la nature physique de la matière de la pièce considérée, le type de pièce concerné, l'épaisseur de ce tube, sa section, son métrage, sa date de fabrication, son code de validité (relatif à la date de péremption) ainsi que l'identité de manufacturier.

Une comparaison des deux codes via l'unité 37 va alors être menée en machine pour une vérification de la compatibilité des deux tubes, ceci pour validation des étapes à venir.

Si les deux codes sont identiques ou compatibles, l'unité 39 va alors faire appel aux paramètres mémorisés dans l'unité mémoire 41 de manière à mettre en oeuvre, en fonction des données qui viennent d'être acquises, les paramètres de la "norme de soudage" à respecter en relation avec la durée et la puissance électrique à délivrer.

On notera que si en mémoire ont été stockés des tableaux de compatibilité, on pourra alors par exemple autoriser le soudage de deux tubes structurellement identiques (mêmes dimensions (diamètre extérieur, épaisseur...), mêmes matières) mais dont les codes renfermeraient des normes de soudage projetées différentes (parce qu'élaborées dans des pays différents).

Grâce à ce(s) tableau(x) de compatibilité, la loi de soudage adaptée au lieu où s'effectue l'opératior pourra être déterminée par la machine et l'opération pourra être menée à bien dans les meilleurs conditions.

Un enchaînement mécanique électropiloté va alors se dérouler.

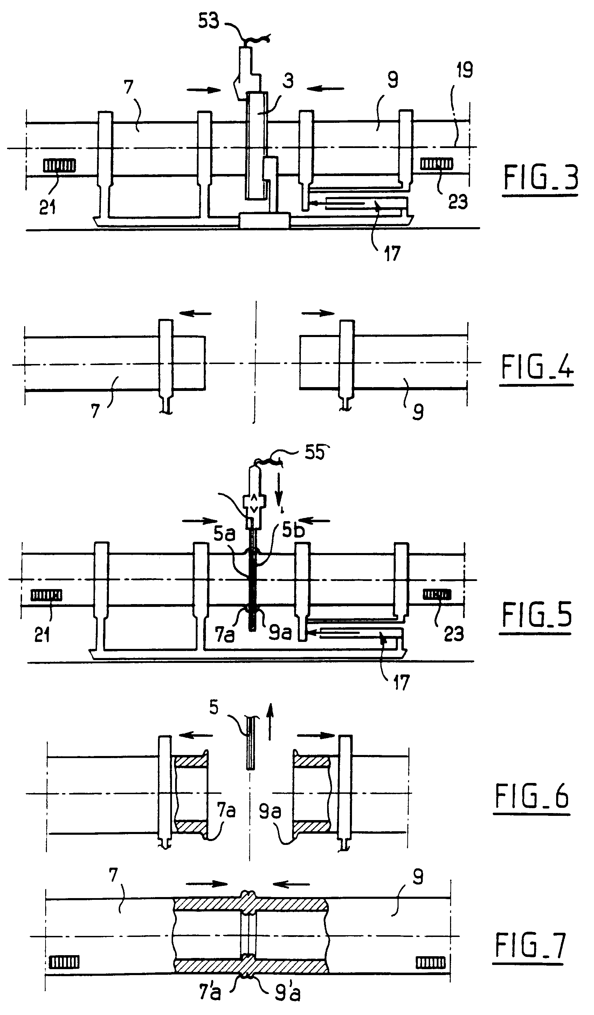

Après mise en place entre les extrémités correctement écartées des deux tubes de l'appareil de dressage 3 (voir figure 3), l'unité de puissance 51 va commander, via la ligne 55, le déplacement de l'unité de vérins 17 avec la mise sous pression convenable des tubes.

Une fois l'opération de dressage/rabotage effectuée, et après vérification de la propreté et du parallélisme des joints desdits tubes toujours alignés, la machine commandera leur écartement de manière que l'appareil 3 puisse être retiré et le miroir chauffant 5 introduit à sa place, comme illustré sur la figure 5. Le déroulement du programme de commande automatisé se poursuivant, la phase de chauffage va alors être déclenchée, la machine commandant, après mise en température régulée (habituellement de l'ordre de 200° à 250° C) des deux faces opposées de contact 5a, 5b du miroir 5, la mise en contact sous pression requise des tubes avec ces faces, ceci par mise en corrélation des paramètres contenus dans la mémoire 41 avec les données opératoires lues sur les codes des tubes.

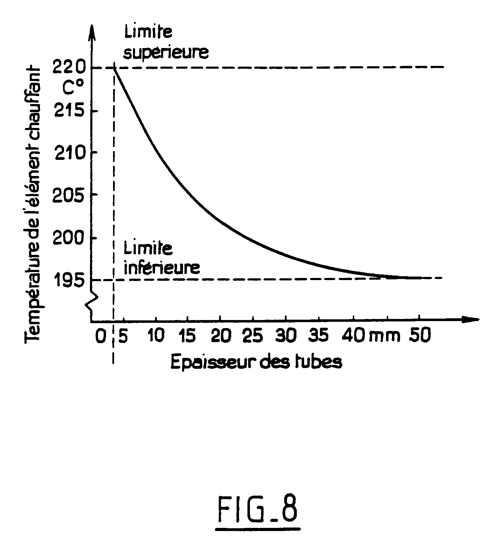

En mémoire de la machine pourra par exemple être stocké l'équivalent du tableau A ci-dessous et de la figure 8 permettant, à partir en particulier de l'épaisseur des tubes et de leur section de joint, voire du type de matière et/ou de l'indice de fluidité (non considéré en l'espèce), de déterminer, par calcul dans l'unité 39, les valeurs des paramètres de soudage à respecter en termes de température, temps et pression (ou force). On notera que dans l'exemple choisi (en relation avec la norme DVS), la force ou pression nécessaire à l'égalisation et au soudage pourra être déterminée et stockée d'après la pression p = 0,15 N/mn2, en tenant compte de la force ou pression nécessaire au déplacement de l'un des tubes (l'autre étant supposé fixe).

**Tableau A**

| Epaisseur de la paroi | Egalisation sous p = 0,15 N/mm² Hauteur du bourrelet avant début du temps de chauffage | Chauffage sous p = 0,01 N/mm² Temps de chauffage | Durée max entre fin du chauffage et début du soudage | Refroidissement sous pression de soudage p = 0,15 N/mm² Durée totale jusqu à refroidissement satisfaisant |
|---|---|---|---|---|
| mm | mm | s | s | min |
| 2 à 3.9 | 0,5 | 30 à 40 | 4 | 4 à 5 |
| 4,3 à 6,9 | 0,5 | 40 à 70 | 5 | 6 à 10 |
| 7,0 à 11,4 | 1,0 | 70 à 120 | 6 | 10 à 16 |
| 12,2 à 18,2 | 1,0 | 120 à 170 | 8 | 17 à 24 |
| 20,1 à 25,5 | 1,5 | 170 à 210 | 10 | 25 à 32 |

En pratique, les extrémités dressées de deux tubes seront appliquées sur les faces du miroir avec une pression et pendant un temps suffisant pour que leur matière de constitution s'échauffe jusqu'à se fluidifier et à fuser en formant deux bourrelets 7a, 9a, la pression pouvant être réduite pendant le temps de chauffage avec ramollissement jusqu'à environ 0,01 N/mm² (norme DVS).

A l'issue, la machine commandera, toujours via l'unté de vérins 17, l'écartement des tubes avec retrait du miroir chauffant 5 (voir figure 6) pouis le rapprochement et le pressage l'une contre l'autre des deux extrémités fluidifiées. de ces mêmes tubes avec maintient sous pression jusqu'au refroidissement (voir figure 7). Pendant ce temps, les deux bourrelets 7'a, 9'a finiront de se former.

Il doit être clair que si les conditions climatiques au moment du soudage ont paru à l'opérateur, avant même l'opération de rabotage, susceptibles de nuire à la qualité de la soudure (vent, pluie...) la possible acquisition de la température initiale des pièces à souder, via le capteur de température 42, aura éventuellement permis de corriger la puissance électrique finalement délivrée par la machine, dans l'éventualité où les mesures de température auront effectivement fait apparaître un écart assez important par rapport à la température nominale préétablie qui se situe habituellement à environ 23°C pour les résines plastiques utilisées à ce jour.

Si l'on s'intéresse maintenant au cas de figure où la zone 6 de chaque code renfermerait elle-même les valeurs numériques attribuables aux critères de compatibilité pouvant être retenus, il est donné ci-après un tableau illustratif (B) des valeurs possibles de ces paramètres, dans l'hypothèse où doivent être soudés bout à bout deux tubes en polyéthylène haute densité (PEHD) ayant comme indice de fluide une valeur choisie stricte : IF₅ = 0,45 (l'indice "5" indiquant que le test habituel a été mené avec un poids de 5 Kg, la masse volumique de la résine étant de 946 Kg/m3 à 23°C).

**Tableau B**

| PARAMETRES | | UNITE | VALEUR | |
|---|---|---|---|---|
| Température du miroir T 63 ≦ de ≦ 250 de > 250 | | °C | (210 ± 15°C) (225 ± 10°C) | |
| PHASE 1 | Pression P1 | N/mm2 (MPa) | 0,18 + 0,02 | |
| | Temps t1 Bourrelet B1 | s mm | jusqu'à obtenir B1 de ≦ 180 | : 1 < B1 ≦ 2 |
| | | | 180 < de ≦ 315 | :2 < B1 ≦ 3 |
| | | | 315 < de | :3 < B1 ≦ 4 |
| PHASE 2 | Pression P2 | N/mm2 (MPa) | 0,03 ± 0,02 | |
| | Temps t2 | s | 30 + de/2 ± 10 | |
| PHASE 3 | Temps t3 | s | max:3 + 0,01 de ≦ 8 | |
| PHASE 4 | Temps t4 | s | max:3 + 0,03 de ≦ 6 | |
| PHASE 5 | Pression P5 | N/mm2 (MPa) | 0,18 ± 0,02 | |
| | Temps t5 | min | minimum:10 | |
| PHASE 6 | Temps t6 | min | min 1,5 e et au maximum 20 | |

| CONDITIONS °C | TEMPERATURE AMBIANTE T°C | | TEMPERATURE MIROIR N/mm2 | PRESSION DE SOUDAGE |
|---|---|---|---|---|
| | | +0 | | |
| Minimum | Tm | -5 | 205 ± 5 | 0,15 ± 0,02 |
| | | -2 | | |
| Maximum | TM | 40 ± 2 | 230 ± 5 | 0,21 ± 0,02 |

Dans ce tableau :
- p =: pression de soudage appliquée sur la face du tube (par exemple) à souder
- t =: temps de chaque phase du cycle de soudage
- e =: épaisseur nominale du tube
- de =: diamètre extérieur nominal du tube
- TR =: température de référence : 23°C + 2°C
- TM =: température ambiante maximale
- Tm =: température ambiante minimale.

Le "miroir" est l'élément chauffant 5.

La température ambiante est la température à laquelle est réalisé l'assemblage. Elle peut varier entre la température minimale Tm et la température maximale Tm.

Concernant les paramètres de soudage retenus :
- la température du miroir 5 (T) est la température mesurée sur la face du miroir, dans la zone de contact avec les parois à souder,
- la pression P₁ pendant la phase d'échauffement des tubes est la pression (en N/mm²) pouvant être appliquée dans la zone de contact tube/miroir,
- la valeur de bourrelet B₁ est la dimension (épaisseur) du bourrelet (en mm) qui doit se former sur le bout du tube du fait de son chauffage et de la "pression" de contact P₁,
- le temps d'échauffement t₁ est le temps (en seconde) nécessaire pour obtenir le bourrelet B₁,
- le temps t3 est le temps qui peut s'écouler entre la séparation tube/miroir et le moment où les tubes sont mis directement en contact bout à bout,
- le temps t4 est le temps de montée en pression des tubes, nécessaire pour établir la pression de soudage P5,
- P5 est cette pression de contact entre les tubes,
- t5 est le temps qui correspond à la durée de maintien de la pression P5,
- t6 est ensuite le temps de refroidissement durant lequel les pièces soudées sont encore laissées sans manipulation,
- et B2 est l'épaisseur du bourrelet qui doit être obtenu en fin de t6.

Bien entendu, notamment ces critères peuvent en tout ou partie être retenus comme paramètres test de la compatibilité, conformément à l'invention.

## Revendications

1. Procédé pour autoriser de manière sélective le soudage bout à bout de deux pièces tubulaires en matière plastique au moyen d'une machine à commande automatique, dans lequel procédé :
- a) on associe à chacune des pièces (7, 9) un code d'identification propre à être lu par des moyens (25) de lecture de la machine,
- b) on entre dans un ordre et en des emplacements déterminés de chaque code, des données relatives à certaines au moins des caractéristiques suivantes :
b₁) épaisseur et diamètre extérieur de la pièce concernée, à son extrémité où elle doit être soudée sensiblement coaxialement avec l'autre pièce,
b₂) température, ou plage de température, correspondant à celle à laquelle un élément de chauffage électrique (5) doit être porté pour que ladite pièce atteigne à son extrémité d'aboutement la température de ramolissement convenant à son soudage,
b₃) intervalle de temps pendant lequel ladite pièce doit être placée au contact dudit élément chauffant,
b₄) intervalle de temps pendant lequel ladite pièce doit subir une pression contre l'autre pièce,
b₅) pression, ou plage de pression, correspondant à celle que doit subir cette pièce pendant ledit intervalle de temps suivant b₄,
b₆) type de matière plastique constituant la pièce, et
b₇) indice, ou plage d'indice, de fluidité de cette matière,
- c) on conduit, par lesdits moyens de lecture (25), une acquisition des données desdits codes,
- d) on fait effectuer par la machine une comparaison entre les codes, donnée par donnée,
- e) si, respectivement, les données acquises relatives auxdites caractéristiques b₁) à b₇) des deux codes concordent deux à deux, une compatibilité entre codes est reconnue et on détermine une série de valeurs communes aux deux pièces, relativement respectivement au moins :
à la température T de chauffage à laquelle doit être porté l'élément chauffant (5) pour que lesdites pièces (7, 9) atteignent à leur extrémité d'aboutement la température de ramolissement convenant à leur soudage,
au temps t₁ pendant lequel lesdites pièces sont à placer au contact de cet élément chauffant,
à la pression P à exercer sur l'une au moins desdites pièces pour les presser, l'une contre l'autre, et
au temps t₂ pendant lequel cette pression de contact entre les pièces doit être maintenue,
f) et on fournit cette série de valeurs au programme de soudage associé à la machine pour autoriser la soudure des pièces en fonction au moins desdites valeurs déterminées selon e).

2. Procédé selon la revendication 1, caractérisé en ce que :
- on associe à la machine une mémoire comprenant au moins deux tableaux de compatibilité relatifs respectivement au type de matière et à l'indice, ou plage d'indice, de fluidité desdites pièces à souder et autorisant, suivant des critères prédéterminés, certaines reconnaissances de compatibilité entre lesdites pièces, même si les indices, ou plages d'indices, de fluidité et les types de matière ne sont pas identiques pour les deux codes,
- et, lors des étapes d) et e), on contrôle la correspondance desdits indices, ou plages d'indices, de fluidité et type(s) de matière d'un code à l'autre, en tenant compte des critères de compatibilité desdits tableaux.

3. Procédé selon la revendication 1 ou la revendication 2 caractérisé en ce que :
- pour certaines au moins des caractéristiques b₁) à b₅), on entre dans chaque code des valeurs numériques, ou des plages de valeurs, relatives à ces caractéristiques, propres à la pièce concernée,
- lors de l'étape e), on compare entre les deux codes ces valeurs ou plages de valeurs,
- et si, à des tolérances prédéterminées près, lesdites valeurs ou lesdites plages de valeurs sont identiques ou se chevauchent, pour lesdites plages, on détermine alors au moins la série de valeurs précitées communes aux deux pièces (t₁, t₂, P, T).

4. Procédé selon la revendication 3 caractérisé en ce qu'on détermine ladite série de valeurs communes aux deux pièces (t₁, t₂, P, T) par calcul de valeurs moyennes, à partir des valeurs ou plages de valeurs de chevauchement correspondant, dans les codes, aux caractéristiques b₁) à b₅) concernées.

5. Procédé pour souder bout à bout sélectivement deux pièces tubulaires en matière plastique, au moyen d'une machine à commande automatique, dans lequel procédé :
- on conduit les étapes a) à f), suivant l'une des revendications 1 à 4,
- après avoir effectué un dressage des extrémités aboutées desdites pièces (7, 9), et si la compatibilité des codes a été reconnue lors de l'étape e), on intercale entre elles ledit élément de chauffage (5) préalablement amené à sa dite température de chauffage T déterminée,
- on amène lesdites pièces en contact avec ce moyen de chauffage (5), pendant ledit intervalle de temps t₁ déterminé,
- puis on commande le retrait du moyen de chauffage (5),
- on met ensuite en contact, à ladite pression de soudage P déterminée, les deux extrémités d'aboutement ramollies des pièces en maintenant l'application de cette pression pendant ledit intervalle de temps déterminé t₂,
- puis on laisse refroidir les pièces, pour en obtenir la soudure.

6. Procédé selon la revendication 5, caractérisé en ce qu'on associe à la machine :
- des moyens (51, 59) pour délivrer audit élément de chauffage (5), une tension et/ou une intensité déterminée(s) permettant de satisfaire les critères de température T et pression P, et
- des moyens (42) pour relever la température des pièces en début de soudage, avant que l'opération de dressage des extrémités d'aboutement desdites pièces soit effectuée, la température relevée des pièces étant transmise à des moyens (39, 41) de mise en oeuvre du programme de soudage pour adapter la durée, la tension et/ou l'intensité du courant électrique appliquée au moyen de chauffage (5), en fonction de la température relevée des pièces.

7. Procédé selon l'une quelconque des revendications précédentes, caractérisé en ce que :
- on regroupe dans chaque code (21, 23) certaines au moins desdites données b₁) à b₅), sous une référence de norme de soudage déterminée (zone 6),
- on associe à la machine une mémoire (41) dans laquelle sont stockées des échelles de valeurs relatives auxdites données regroupées,
- à partir de ces échelles de valeurs, on attribue pour chaque code les valeurs correspondant à chacune desdites données regroupées sous ladite référence de norme,
- lors de l'étape e), on compare code à code les valeurs attribuées, et
- si ces valeurs concordent, on détermine lesdites valeurs de température, pression et temps communes au deux pièces, par calcul de valeurs moyennes.

8. Procédé selon l'une quelconque des revendications précédentes, caractérisé en ce que :
- on regroupe dans chaque code (21, 23) certaines au moins desdites données b₁) à b₅) sous une référence de norme de soudage déterminée (zone 6),
- on associe à la machine une mémoire (41) dans laquelle sont stockées des échelles de valeurs relatives auxdites données regroupées,
- à partir de ces échelles de valeurs, on attribue pour chaque code les valeurs correspondant à chacune desdites données regroupées sous ladite référence de norme,
- lors de l'étape e), on compare code à code les valeurs attribuées, et
- si ces valeurs concordent, on détermine lesdites valeurs de température, pression(s) et temps, en appliquant un coefficient rectificateur en fonction des références de norme de soudage propres aux codes.

## Claims

1. Process for authorising selectively the end-to-end welding of two tubular parts of plastics material by means of an automatically controlled machine, in which process:
- a) an identification code that can be read by reading means (25) of the machine is associated with each of the parts (7, 9);
- b) data relating to at least some of the following characteristics are entered in an order and at determined positions of each code:
b₁) thickness and outside diameter of the part concerned, at its end where it is to be welded substantially coaxially with the other part;
b₂) temperature, or temperature range, corresponding to that to which an electrical heating element (5) has to he heated in order for the said part to reach, at its abutment end, the softening temperature suitable for it to be welded;
b₃) time interval during which the said part has to be placed in contact with the heating element;
b₄) time interval during which the said part has to be pressed against the other part;
b₅) pressure, or pressure range, corresponding to that to which the part has to be subjected during the time interval according to b₄;
b₆) type of plastics material forming the part; and
b₇) index, or index range, of plasticity of that material;
- c) the data of the codes are acquired by means of the reading means (25);
- d) the machine is caused to make a comparison between the codes, datum by datum;
- e) if, respectively, the acquired data relating to the characteristics b₁) to b₇) of the two codes correspond two by two, a compatibility between codes is recognised and a series of values common to the two parts is determined, those values relating, respectively, at least:
to the heating temperature T to which the heating element (5) has to be heated so that the parts (7, 9) attain, at their abutment end, the softening temperature suitable for them to be welded;
to the time t₁ during which the parts are to be placed in contact with the heating element;
to the pressure P to be exerted on at least one of the parts in order to press them against one another; and
to the time t₂ during which this contact pressure between the parts has to be maintained;
f) and this series of values is supplied to the welding programme associated with the machine in order to authorise the welding of the parts as a function at least of the values determined according to e).

2. Process according to Claim 1, characterised in that:
- a memory which comprises at least two compatibility tables relating, respectively, to the type of material and to the index, or index range, of plasticity of the parts to be welded, and which authorises, in accordance with predetermined criteria, given compatibility recognitions between the parts, even if the indices, or ranges of indices, of plasticity and the types of material are not identical for the two codes, is associated with the machine;
- and, during stages d) and e), the correspondence of the indices, or ranges of indices, of plasticity and type(s) of material is checked from one code to another, taking into account the compatibility criteria of the tables.

3. Process according to Claim 1 or Claim 2, characterised in that:
- for at least some of characteristics b₁) to b₅), digital values, or ranges of values, relating to those characteristics and peculiar to the part concerned are entered in each code;
- during stage e), these values or value ranges of the two codes are compared;
- and if, except for predetermined tolerances, the values or value ranges are identical or overlap, in the case of the ranges, at least the series of above-mentioned values common to the two parts (t₁, t₂, P, T) is determined.

4. Process according to Claim 3, characterised in that the series of values common to the two parts (t₁, t₂, P, T) is determined by calculating average values, on the basis of the values or overlapping value ranges which correspond, in the codes, to the characteristics b₁) to b₅) concerned.

5. Process for welding selectively, end to end, two tubular parts of plastics material by means of an automatically controlled machine, in which process:
- stages a) to f) according to any one of Claims 1 to 4 are carried out;
- after aligning the abutting ends of the parts (7, 9), and if the compatibility of the codes has been recognised in stage e), the heating element (5) which has been heated beforehand to its determined heating temperature T is interposed between the parts;
- the parts are brought into contact with the heating means (5) for the determined time interval t₁;
- the heating means (5) is then caused to be withdrawn;
- the two softened abutment ends of the parts are then brought into contact with one another, at the determined welding pressure P, the application of this pressure being maintained for the determined time interval t₂;
- the parts are then allowed to cool in order to achieve the welding thereof.

6. Process according to Claim 5, characterised in that there are associated with the machine:
- means (51, 59) for delivering to the heating element (5) a determined voltage and/or intensity enabling the criteria of temperature T and pressure P to be met; and
- means (42) for detecting the temperature of the parts at the beginning of the welding operation, before the operation of aligning the abutment ends of the parts is carried out, the detected temperature of the parts being transmitted to means (39, 41) for implementing the welding programme in order to adapt the duration, voltage and/or intensity of the electric current applied to the heating means (5), as a function of the detected temperature of the parts.

7. Process according to any one of the preceding claims, characterised in that:
- at least some of the data b₁) to b₅) are grouped in each code (21, 23) under a determined welding standard reference (zone 6);
- a memory (41) in which value scales relating to the grouped data are stored is associated with the machine;
- on the basis of these value scales, the values corresponding to each of the data grouped under the standard reference are attributed for each code;
- in stage e), the attributed values are compared code by code; and
- if the values correspond, the temperature, pressure and time values common to the two parts are determined by calculating average values.

8. Process according to any one of the preceding claims, characterised in that:
- at least some of the data b₁) to b₅) are grouped in each code (21, 23) under a determined welding standard reference (zone 6);
- a memory (41) in which value scales relating to the grouped data are stored is associated with the machine;
- on the basis of these value scales, the values corresponding to each of the data grouped under the standard reference are attributed for each code;
- in stage e), the attributed values are compared code by code; and
- if the values correspond, the temperature, pressure and time values are determined by applying a correcting coefficient as a function of the welding standard references peculiar to the codes.

## Patentansprüche

1. Verfahren, um ein selektives Aneinanderschweißen von zwei Enden zweier rohrförmiger Teile aus Kunststoff vermittels einer automatisch gesteuerten Maschine zu ermöglichen, wobei bei dem Verfahren
- a) jedem der Teile (7, 9) ein Identifikationscode zugeordnet wird, der von Lesern (25) der Maschine gelesen werden kann,
- b) in einer Reihenfolge und an bestimmten Stellen eines jeden Codes Daten zu mindestens einigen der folgenden Merkmale eingegeben werden:
b1) Stärke und Außendurchmesser des betroffenen Teils an dem Ende, an dem es genau koaxial mit dem anderen Teil verschweißt werden soll,
b2) Temperatur oder Temperaturbereich, der derjenigen/demjenigen entspricht, auf die/den ein elektrisches Heizelement (5) erhitzt werden muß, damit das besagte Teil an dem für das Aneinanderfügen vorgesehenen Ende die für sein Verschweißen geeignete Erweichungstemperatur erreicht,
b3) Zeitspanne, während der das besagte Teil mit dem besagten Heizelement in Kontakt verbleiben muß,
b4) Zeitspanne, während der das besagte Teil gegen das andere Teil gedrückt werden muß,
b5) Druck oder Druckbereich, der dem entspricht, der auf das Teil während der unter b4) spezifizierten Zeitspanne einwirken soll,
b6) Art des Kunststoffs, aus der das Teil besteht, und
b7) Fluiditätsindex oder Fluiditätsindexbereich dieses Materials,
- c) durch die besagte Leseeinrichtung (25) eine Erfassung der Daten der besagten Codes vorgenommen wird,
- d) ein Vergleich der Codes, Datum um Datum, durch die Maschine veranlaßt wird,
- e) Wenn die zu den Merkmalen b1) bis b7) erfaßten Daten der beiden Codes einander paarweise entsprechen, so wird eine Code-Kompatibilität erkannt, und es wird mindestens hinsichtlich folgender Merkmale eine Reihe von beiden Teilen gemeinsamen Werten bestimmt:
Temperatur T, auf die das Heizelement (5) erhitzt werden muß, damit die besagten Teile (7, 9) an ihrem für das Aneinanderfügen vorgesehenen Ende die für ihr Verschweißen geeignete Erweichungstemperatur erreichen,
Zeit t1, während der die besagten Teile in Kontakt mit dem Heizelement verbleiben müssen,
Druck P, der auf wenigstens eines der besagten Teile ausgeübt werden muß, damit beide aneinandergedrückt werden, und
Zeit t2, während der der Kontaktdruck zwischen den Teilen aufrechterhalten werden muß,
- f) und es wird diese Reihe von Werten an das Schweißprogramm geliefert, um das Verschweißen der Teile zumindest in Abhängigkeit von den gemäß e) bestimmten Werten zu gestatten.

2. Verfahren gemäß Anspruch 1, dadurch gekennzeichnet, daß
- der Maschine ein Speicher zugeordnet wird, der mindestens zwei Kompatibilitätstabellen beinhaltet, von denen sich eine auf den Materialtyp und die andere auf den Fluiditätsindex bzw. den Fluiditätsindexbereich der zu verschweißenden Teile bezieht, und die nach vorgegebenen Kriterien die Erkennung bestimmter Kompatibilitäten unter den besagten Teilen gestattet, selbst wenn die Fluiditätsindices oder Fluiditätsindexbereiche und die Materialarten bei den beiden Codes nicht gleich sind,
- und während der Phasen d) und e) Kontrolle auf Übereinstimmung der besagten Indices oder Indexbereiche und des Materialtyps/der Materialtypen bei beiden Codes unter Berücksichtigung der Kompatibilitätskriterien der Tabellen.

3. Verfahren gemäß Anspruch 1 oder Anspruch 2 dadurch gekennzeichnet, daß:
- für einige zumindest der Merkmale b1) bis b5) in jeden Code zu den Merkmalen gehörende dem betreffenden Teil eigene digitale Werte oder Wertebereiche eingegeben werden,
- in Verlauf von Phase e) die Werte oder Wertebereiche zwischen den beiden Codes verglichen werden,
- und wenn die besagten Werte oder Wertebereiche bis auf vorgegebene Toleranzen gleich sind bzw. sich überschneide, so wird sodann mindestens die Reihe von o.g. Werten bestimmt, die beiden Teilen gemeinsam sind (t1, t2, P, T).

4. Verfahren gemäß Anspruch 3 dadurch gekennzeichnet, daß die besagte Reihe von beiden Teilen gemeinsamen Werten (t1, t2, P, T) durch Berechnung von Mittelwerten auf der Basis der in den Codes den Merkmalen b1) bis b5) entsprechenden Werte oder Überlappungsbereiche bestimmt wird.

5. Verfahren zur selektiven Verschweißung Ende an Ende von zwei rohrförmigen Teilen aus Kunststoff mittels einer vollautomatischen Maschine, bei dem
- die Phasen a) bis f) gemäß einem der Ansprüche 1 bis 4 ablaufen,
- nachdem die stumpf aneinandergefügten Enden der besagten Teile (7, 9) gerichtet wurden, und vorausgesetzt, daß die Kompatibilität der Codes im Verlauf von Phase e) erkannt wurde, zwischen die Teile das zuvor auf die vorgegebenen Heiztemperatur T gebrachte besagte Heizelement (5) eingefügt wird,
- die besagten Teile während der gegebenen Zeitspanne t1 in Kontakt mit dem Heizelement (5) gehalten werden,
- sodann das Entfernen des Heizelements (5) veranlaßt wird,
- die beiden erweichten aneinanderzufügenden Enden der Teile bei dem vorgegebenen Schweißdruck P in Kontakt gebracht werden und der Schweißdruck während der Zeitspanne t2 aufrechterhalten wird,
- und bei dem man sodann die Teile abkühlen läßt, um ihre Verschweißung zu erhalten.

6. Verfahren gemäß Anspruch 5, dadurch gekennzeichnet, daß man der Maschine folgendes zuordnet:
- Mittel (51, 59), um an das besagten Heizelement (5) eine gegebenen Spannung und/oder einen gegebenen Strom abzugeben, die/der eine Beachtung der Kriterien Temperatur T und Druck P gestattet/n und
- Mittel (42), um die Temperatur der Teile zu Schweißbeginn zu erfassen, bevor das Richten der aneinanderzufügenden Enden der besagten Teile durchgeführt ist, wobei die erfaßte Temperatur der Teile an Mittel (39, 41) zur Durchführung des Schweißprogramms übermittelt wird, um die Dauer, die Spannung und/oder die Stärke des an das Heizelement (5) angelegten elektrischen Stroms in Abhängigkeit von der erfaßten Temperatur der Teile zu regeln.

7. Verfahren gemäß einem x-beliebigen der vorgenannten Ansprüche dadurch gekennzeichnet, daß:
- in jedem Code (21, 23) zumindest einige der besagten Daten b1) bis b5) unter einem bestimmten Schweißnormenverweis (Bereich 6) zusammengefaßt werden,
- der Maschine ein Speicher (41) zugeordnet wird, in dem Werteskalen zu den besagten zusammengefaßten Daten abgelegt sind,
- ausgehend von diesen Werteskalen für jeden Code die jedem der besagten zusammengefaßten Daten entsprechenden Werte unter dem besagten Normenverweis zugeordnet werden,
- während der Phase e) Code um Code die zugeordneten Werte verglichen werden und
- bei Übereinstimmung der Werte die besagten Temperatur-, Druck- und Zeitwerte, die beiden Teilen gemeinsam sind, durch Berechnung von Mittelwerten bestimmt werden.

8. Verfahren gemäß irgendeinem der vorgenannten Ansprüche, dadurch gekennzeichnet, daß:
- in jedem Code (21, 23) wenigstens einige der besagten Daten b1) bis b5) unter einem bestimmten Normenverweis (Bereich 6) zusammengefaßt werden,
- der Maschine ein Speicher (41) zugeordnet wird, in dem Werteskalen zu den besagten Datengruppen abgelegt sind,
- ausgehend von diesen Werteskalen werden für jeden Code die jedem der unter dem besagten Normenverweis zusammengefaßten Daten entsprechenden Werte zugeordnet werden,
- während der Phase e) durch Gegenüberstellung der Codes die zugeordneten Werte verglichen werden,
- bei Übereinstimmung der Werte die besagten Temperatur-, Druck- und Zeitwerte durch Anwendung eines Korrekturkoeffizienten in Abhängigkeit von den den Codes eigenen Normenverweisen bestimmt werden.
